# EUROPEAN PATENT SPECIFICATION

(11) **EP 3 741 967 B1**
(45) Date of publication and mention of the grant of the patent: **17.01.2024**
(21) Application number: 19175645.1
(22) Date of filing: 21.05.2019
(51) Int. Cl.: F01N 3/10, F01N 13/00

(54) **EXHAUST DEVICE FOR A TWO WHEELED VEHICLE**
ABGASVORRICHTUNG FÜR EIN ZWEIRÄDRIGES FAHRZEUG
DISPOSITIF D'ÉCHAPPEMENT POUR VÉHICULE À DEUX ROUES

(43) Date of publication of application: 25.11.2020
(73) Proprietor: TVS Motor Company Limited, Chennai 600006 (IN)
(72) Inventor: Gurusubramanian, Karthikeyan, 600006 Chennai (IN); Saravanakumar, Kalimuthu, 600006 Chennai (IN); Bharaniram, Senthilkumar, 600006 Chennai (IN); Mani, Boobalan, 600006 Chennai (IN)
(74) Representative: Patentanwaltskanzlei Matschnig & Forsthuber OG

(56) References cited:
- EP-A1- 1 609 963
- EP-A1- 3 165 731
- EP-A1- 3 165 738
- EP-A1- 3 236 037

## Description

### TECHNICAL FIELD

The present subject matter relates generally to an internal combustion engine for a two wheeled vehicle and more particularly to an exhaust device for it.

### BACKGROUND

Generally, a two wheeled vehicle comprises of a frame assembly extending rearwardly from a head tube. The frame assembly acts as a skeleton and a structural member for the vehicle that supports the vehicle loads. A front wheel is connected to a front portion of the frame assembly through one or more front suspension(s). The frame assembly extends towards a rear portion of the vehicle. A rear wheel is connected to a frame assembly through one or more rear suspension(s). The frame assembly comprises of an engine assembly coupled to it. The engine assembly is functionally connected to the rear wheel, which provides forward motion to the vehicle. An exhaust device is provided at a lateral side of the vehicle mounted to the frame assembly or the vehicle through a mounting bracket. The exhaust device extends in a rearward direction along the length of the vehicle. An exhaust port is provided in the engine assembly through which an exhaust pipe extends in a reverse direction forming a part of the muffler assembly.

Conventionally, in a two-wheeled vehicle the exhaust device is provided to reduce the toxicity of exhaust gases and to dampen the noise arising from the engine. The Exhaust device comprises of a catalytic converter which helps in oxidation of the carbon monoxides, unburnt hydrocarbons and NOx into harmless oxides which are ultimately released in the atmosphere. Generally a baffle assembly is provided in the exhaust system which helps in dampening the noise and provides a better sound quality. It also helps in reducing the temperature of the exhaust gases being emitted. Furthermore, an exhaust system also adds to the aesthetic appeal of the two wheeled vehicle as well.

EP3165731 A1 discloses a single-cylinder four-stroke engine unit comprising a single-combustion-chamber main catalyst provided between the upstream bended portion and the downstream bended portion of the single-combustion-chamber exhaust pipe, the single-combustion-chamber main catalyst being provided at least partially frontward of the central axis of the crankshaft in the front-rear direction of the vehicle, and capable of more stably detecting the oxygen density in exhaust gas.

### BRIEF DESCRIPTION OF THE DRAWINGS

The detailed description of the present subject matter is described with reference to the accompanying figures. Same numbers are used throughout the drawings to reference like features and components.
**Fig. 1****.** illustrates the side view of a two-wheeled vehicle employing an embodiment of the present invention.
**Fig. 2****.** illustrates the enlarged side view of an internal combustion engine and the exhaust device according to the embodiment of the present invention.
**Fig. 3****.** illustrates the side cut section view of a exhaust device according to the embodiment of the present invention.
**Fig. 4****.** illustrates a front cut sectional view of the internal combustion engine and an exhaust device according to the embodiment of the present invention.
**Fig. 5****.** illustrates the side view of a exhaust device according to the embodiment of the present invention.
**Fig. 6a.** and **Fig. 6b****.** illustrates the vehicle speed v. CO₂ (% by Volume) graph and vehicle speed v. CO (% by Volume) graph illustrating the improved performance of the first catalytic converter () according to the embodiment of the present invention.

### DETAILED DESCRIPTION

Various features and embodiments of the present invention here will be discernible from the following further description thereof, set out hereunder. In the ensuing exemplary embodiments, the vehicle is a two wheeled vehicle with a step-through frame colloquially called scooter. However it is contemplated that the disclosure in the present invention may be applied to any two wheeled vehicle.

The detailed explanation of the constitution of parts other than the present invention which constitutes an essential part has been omitted at suitable places.

Typically, in a two wheeled vehicle such as a scooter, a swinging internal combustion engine is located below the seat at a lower rear portion of the vehicle. The internal combustion engine is swingably supported by rear suspension system and attached to the frame assembly of the two wheeled vehicle. An exhaust device forms a part of the IC engine and extends rearwardly along the length of the vehicle towards any one side viz. on right or left of the two wheeled vehicle. In one embodiment, the exhaust device emerges from the cylinder head, and is routed through the right side of the scooter vehicle and passes in front of a forced air cooling system of the IC engine and extending rearwards adjacent to a rear wheel of the two wheeled vehicle.

Air fuel mixture is supplied to the IC engine by means of an intake system. Thereafter combustion of the air fuel mixture takes place so that a piston disposed in the IC engine is set into motion. The piston is operated in a linear motion, after which said liner motion is converted to a rotational motion, wherein said rotational motion is transferred to the rear wheel finally resulting into motion of the vehicle. This mechanism also results in generation of power and torque by the IC engine. The exhaust gases produced after combustion is expelled from the IC engine through an exhaust port which facilitates the movement of the exhaust gases to an exhaust device. The unburnt hydrocarbons in the exhaust gases is oxidized as it passes through a catalytic converter and there is reduction in noise as it passes through the muffler unit and is later released in the atmosphere. Typically, the exhaust gases enter the exhaust device through an exhaust pipe front portion after which it passes through the catalytic converter for conversion, and finally enter the baffle assembly within the muffler unit. In the baffle assembly the gases pass through a bend pipe and are released through a set of perpetrating holes formed at its end. The gases finally enter a baffle pipe before being emitted into the atmosphere through a tail pipe. This whole process provides a better diffusion of the gases so that the noise is dampened and a better sound quality is provided. The current process also helps in reduction of temperature of gases. Additionally the exhaust device also adds to the aesthetics and aerodynamics features of the vehicle.

The catalytic converter functions to reduce the harmful carbon monoxide and unburnt hydrocarbons in the exhaust gas to carbon dioxides by catalyzing it using a catalyst by a redox reaction. The catalytic converter has in its inner structure arranged in the form of dense honeycomb structure so that the exhaust gases touch a bigger area of catalyst so that they are converted more quickly and efficiently. The catalyst is usually rare earth metals such as platinum to convert the exhaust gases. In many applications, particularly those involving IC engines swingably mounted and enclosed within side body covers of the vehicle, there is little room for mounting exhaust devices. Hence, the space to accommodate the catalytic converter is constrained. To obtain necessary performance of the catalytic converter, the catalytic converter should be of certain predetermined length and have a predetermined surface area of contact for most optimum performance of the catalytic converter. However, due to space and layout constraints in scooter type vehicle lengthier catalytic converter is not possible. Further, in order to optimize the performance longer catalytic converter is detrimental from the point of view pressure loss of exhaust gases between the upstream end and downstream end of the catalytic converter.

A solution to the problem is to use two catalytic converters, namely first catalytic converter and a second catalytic converter. The first catalytic converter is disposed substantially upstream of the exhaust device on the exhaust pipe front portion. The second catalytic converter is disposed substantially downstream and the junction wherein the exhaust pipe front portion joins the muffler unit. This way, the exhaust gases can be made to come in contact with sufficient surface area of the catalyst to completely catalyze the redox reaction and there is minimal pressure loss of the exhaust gases.

However, the mounting of the first catalytic converter on the exhaust pipe front portion is a challenge. The location of the first catalytic converter is crucial. The catalyst within the first catalytic converter starts functioning only when the temperature within the first catalytic converter is high enough and starts to glow red hot. The temperature in which it is achieved is called activation temperature. The goal of any catalytic converter mounting is locating it to achieve the activation temperature as quickly as possible. The first catalytic converter can be disposed upstream closer to the exhaust port, however this causes the first catalytic converter to excessively increase in temperature due to the contact with hot exhaust gases and from the catalytic oxidation of uncombusted hydrocarbons and carbon monoxide and may end up reducing the life of the catalyst. Further, the honeycomb structure within the catalytic converter must withstand rapid temperature changes when the automobile engine is started and stopped. Such operating conditions require the honeycomb structure to have a high thermal resistance which increases cost and also can reduce life.

Further, the catalytic converter is enclosed within a catalytic adaptor disposed on the exhaust pipe front portion. If the catalytic adaptor is disposed in a closer position to the IC engine upstream, it may be subjected to ground contact when the vehicle travels over a road bump. However, if the catalytic adaptor is disposed further downstream from the IC engine, the time taken to achieve activation temperature is more and hence during this period the harmful exhaust gases may not be oxidized. Hence, a slow time period to achieve activation temperature for effective working of the catalytic converter is a detriment in terms of performance of the catalytic converter. Furthermore, when the first catalytic converter is placed further downstream, it is disposed adjacent to a centrifugal fan of the forced cooling system of the IC engine. Then, the first catalytic converter is subjected to cool atmospheric air which is drawn inside by the centrifugal fan which tends to delay the time taken to achieve activation temperature.

Furthermore, an oxygen sensor is useful to mount upstream of the first catalytic converter. The oxygen sensor detects the oxygen content in the exhaust gas and readjusts the fuel injection to the intake system accordingly. Every fuel different compositions of hydrocarbons and hence will need different amounts of air required to combust it fully. By using an oxygen sensor and adjusting the fuel intake into the IC engine, complete combustion of fuel can be ensured resulting in lesser emissions. Oxygen sensors have high operating temperature ranges and hence, must be disposed at an optimum location before the first catalytic converter. Hence, in addition to an optimum location of the first catalytic converter, the oxygen sensor also needs to be mounted for optimum performance.

As highlighted, the first catalytic converter location is extremely important. Suppose the catalytic converter is located front near the bent corner as the exhaust pipe takes a turn, the catalytic converter is disposed too close to the exhaust port and catalytic meltdown can happen. Further, it can result in high exhaust back pressure which can decrease the efficiency of the IC engine as the piston has to perform more work in order to overcome the back pressure forces. Furthermore, manufacture of bent catalytic converter is expensive requiring special manufacturing operations. Even, if the catalytic converter is located further downstream of the bent corner, the catalytic converter is generally disposed in a lower level as compared to any other vehicle member, and hence there is strong likelihood of being subjected to road bumps. Further, invariably disposing the catalytic converter further downstream of the bent corner may result in being disposed in the immediate vicinity of a shroud window of a cooling system of the IC engine. Since, the catalytic converter glows hot during operation, it radiates a lot of heat to the atmosphere. This radiated heat has a high probability of heating the incoming air entering the shroud window. This can reduce the efficiency of the cooling system. Also, the catalytic converter should be disposed such that, the radiated heat is naturally cooled without impeding any of the other systems. Hence, an optimum location of the first catalytic converter is desirable to ensure faster activation temperature and alleviate the above mentioned drawbacks.

Hence, it is the principal object of the present subject matter is to provide an optimum location for the first catalytic converter wherein in quicker activation temperature is achieved.

Another object is to locate the first catalytic converter such that, it does not heat the incoming air entering the shroud window of a cooling system and is subjected to road bumps.

Another object is to locate the first catalytic converter to obtain best performance of the catalytic converter without compromising on catalytic converter life and decreased performance.

With the above design changes, the following advantages can be obtained such as improved performance of catalytic converter, and hence reduced emissions emitted from the IC engine. The first catalytic converter is disposed such that, the hot air radiated from it does not enter the engine cooling system. Further, the catalytic adaptor is not subjected to road bumps. Furthermore, complex manufacturing techniques to make bent catalytic converters can be avoided.

The present invention is an internal combustion engine according to appended claim 1.

The exhaust device may further comprise a second catalytic converter disposed at the other end of the exhaust pipe front portion where the exhaust pipe front portion meets the muffler unit. The exhaust pipe front portion is made up of two portions, namely a first exhaust pipe and a second exhaust pipe, and a catalytic adaptor supporting the first catalytic converter is secured between the rear end of the first exhaust pipe and the front end of the second exhaust pipe.

The present invention along with all the accompanying embodiments and their other advantages are described in greater detail in conjunction with the figures in the following paragraphs.

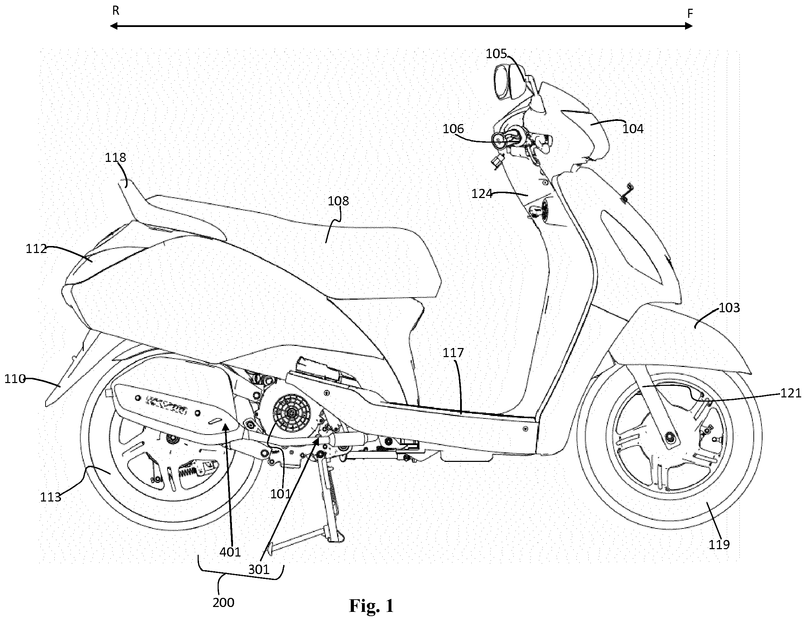

**Fig. 1** illustrates the two wheeled vehicle **(100)** in accordance with one embodiment of the present invention. The vehicle comprises of a frame which is conventionally an underbone chassis frame which provides a generally open central area to permit "step-through" mounting by a rider. Typically, the frame assembly comprises of a head tube (not shown), a main tube (not shown), and a pair of side tubes (not shown). The two wheeled vehicle extends from a front portion **(F)** to a rear portion **(R)** in a longitudinal axis **(F-R).** The head tube is disposed towards the front portion **(F),** and the main tube extends downwardly and rearwardly from the head tube **(102)** forming a flat horizontal step-through portion **(117).** The pair of side-tubes extends rearwardly from the other end of the main tube and supports vehicular attachments such as a seat **(108),** fuel tank assembly (not shown), a utility box (not shown) and pillion handrest **(118).** The head tube supports a steering tube and further connected to the front suspension system **(121)** at the lower end. A handlebar support member **(124)** is connected to an upper end of the steering tube and supports a handlebar assembly **(106).** Two telescopic front suspension system **(121)** (only one is shown) supports the front wheel **(119).** The upper portion of the front wheel **(119)** is covered by a front fender **(103)** mounted to the lower portion of the steering tube **(104).** The rear wheel **(113)** is supported towards the rear side of the frame by the IC engine **(101)** which is horizontally coupled swingably to the rear of the frame assembly of the two wheeled vehicle through a rear suspension system (not shown). The IC engine **(101)** transfers the drive directly to the rear wheel **(113)** as it is coupled directly to it. The IC engine **(101)** comprises a continuously variable transmission (CVT) system, said CVT system disposed leftward of the IC engine **(101)** in the vehicle width direction. The rear wheel **(113)** is enclosed by a rear fender **(110)** connected to the frame assembly.

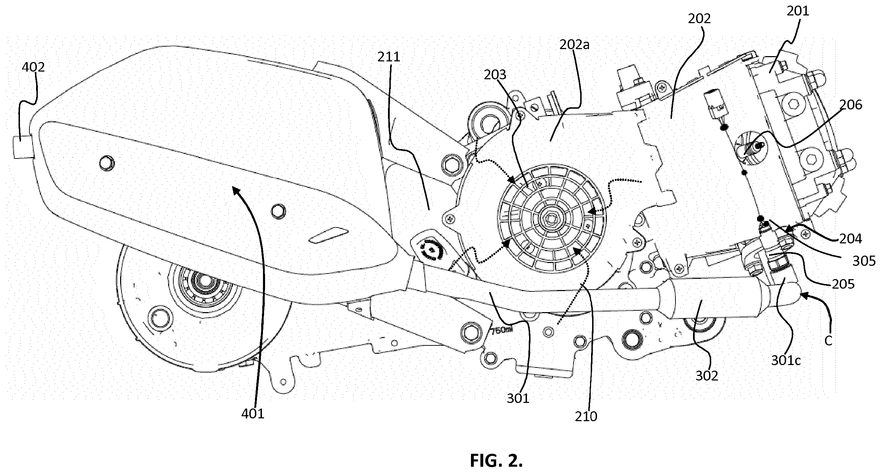

**Fig. 2****.** illustrates a side view of the IC engine **(101)** and the exhaust device **(200)** connected to it according to the embodiment of the present invention. The IC engine **(101)** is made up of a cylinder head **(201a),** cylinder block (not shown) and crankcase **(211).** The IC engine **(101)** also comprises of a magneto assembly (not shown) which functions as a magneto coil assembly during operation to recharge a battery. The IC engine **(101)** comprises a reciprocating piston (not shown) enclosed in the cylinder block, a connecting rod (not shown) connecting the reciprocating piston to a rotatable crankshaft (not shown). During operation, fuel and air mixture from an induction system enter a combustion chamber disposed between the cylinder head and cylinder block through an intake port disposed on the cylinder head **(201a).** The burning of fuel and oxidizer occurs in the combustion chamber and transfers mechanical energy of the reciprocating piston to the rotatable crankshaft which generates power due to the slider crank mechanism. In the embodiment of the present invention, the engine operates in four cycles namely, intake stroke, compression stroke, power, and exhaust stroke. Combustion of air fuel mixture occurs at the end of compression stroke and beginning of power stroke, after combustion the hot exhaust gases are generated which are expelled out of the combustion chamber during the exhaust stroke to an exhaust port **(305)** within the cylinder head **(201a)** and is passes to the exhaust device **(200).**

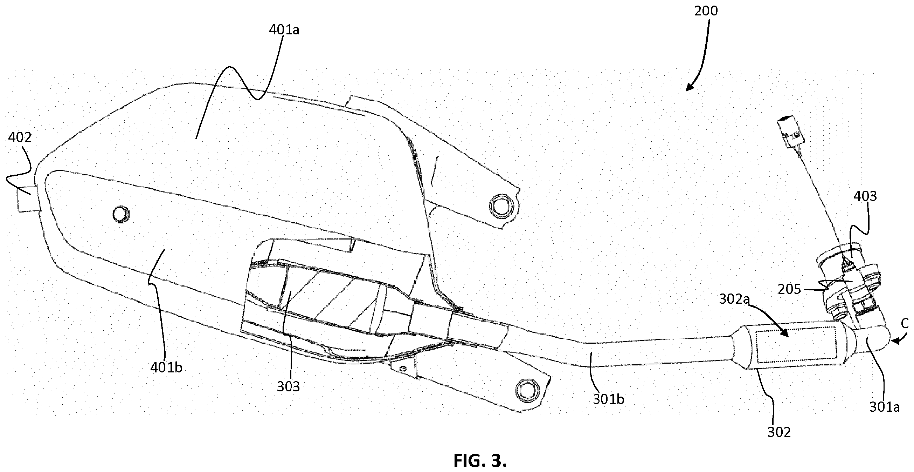

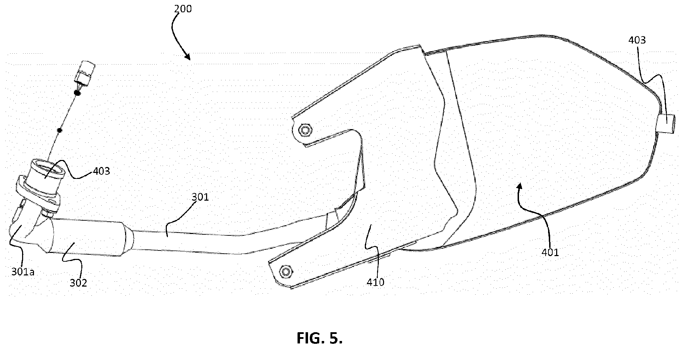

**Fig. 3****.** illustrates the cut sectional view of the exhaust device **(200)** according to the embodiment of the present invention. **Fig. 5****.** illustrates the side view of a exhaust device according to the embodiment of the present invention.

The exhaust device **(200)** will now be explained with reference to these two figures. The exhaust device **(200)** comprises an exhaust pipe front portion **(301)** which is connected to the exhaust port **(305)** and extends rearwards, and a muffler unit **(401)** which is connected to the exhaust pipe front portion **(301)** and exhausts the high-temperature and high-pressure gases passing through the exhaust device **(200)** to the outside atmosphere which reducing the pressure and noise of the exhaust gases. There are two catalytic converters namely a first catalytic converter **(302a)** and a second catalytic converter **(303)** disposed on the exhaust device **(200).** Both the catalytic converters **(302a & 303)** functions to reduce the harmful carbon monoxide and unburnt hydrocarbons in the exhaust gas to carbon dioxides by catalyzing it by a redox (reduction and oxidation) reaction. The first catalytic converter **(302a)** is disposed in a catalytic adaptor **(302)** disposed substantially in a downstream on the exhaust pipe front portion **(301).** The second catalytic converter **(303)** is connected to the exhaust pipe front portion **(301)** at the other end wherein it joins the muffler unit **(401).** The entire second catalytic converter **(303)** is disposed and housed within the muffler unit **(401).** The exhaust pipe front portion **(301)** is essentially made up of two pipes, one within the other. An inner pipe portion and the outlet pipe portion. The exhaust pipe front portion **(301)** has a mounting flange **(403)** at one end for mounting to a corresponding mounting surface **(204)** on the cylinder head **(201a)** of the IC engine **(101).** The exhaust pipe front portion **(301)** is divided into two portions, namely a first exhaust pipe **(301a)** and a second exhaust pipe **(301b).** The catalytic adaptor **(302a)** is a single structure, and is secured between the rear end of the first exhaust pipe **(301a),** and the front end of the second exhaust pipe **(301b).**

The catalytic adaptor **(302)** is placed on the exhaust pipe front portion **(301)** such that, the bottom point of the catalytic adaptor **(302)** is almost inline to the bottommost point of the internal combustion engine **(101).** This permits natural air flow around the catalytic adaptor **(302)** and provides optimum ground clearance. This is essential as during engine swing on operation, the road bumps should not impact and damage the catalytic adaptor **(302).** As observed in Fig. 1, the internal combustion engine **(101)** is covered by a cooling system **(202)** including a shroud window **(203).** The cooling system **(202)** is configured to draw air inside through the shroud window **(203)** to perform cooling of the internal combustion engine **(101).** The exhaust device **(200)** is secured such that at least a part of said exhaust pipe front portion **(301)** is disposed in a region in front of the shroud window **(203)** and said catalytic adaptor **(302)** is not within said region.

From the second catalytic converter **(303),** the exhaust gases enter the muffler unit **(401).** The muffler unit **(401)** is designed to reduce the noise due to sound pressure created by the IC engine **(101)** on the exhaust gases by way of acoustic quieting. The emitted noise is 'muffled' by a series of resonating chambers (not shown) lined with insulation harmonically tuned to cause destructive interference, wherein opposite sound waves cancel each other out. The series of resonating chambers provides sufficient volume and time for diffusion of the exhaust gases resulting in better sound quality and decreased temperature. The exhaust gas is finally made to exit through a tail pipe **(402)** to the atmosphere. The muffler unit (401) is usually made of sheet metal using steel alloy as a material. Due to hot exhaust gas circulation throughout the various passages of the resonating chamber, the exterior surface of the muffler unit **(401)** can become very hot. Due to the disposition of the muffler unit **(401)** adjacent to the rear wheel and exposed outwards, there is a tendency for the muffler unit **(401)** to come in contact with a rider or passenger feet. Hence, a muffler guard **(410)** is attached on the outer surface of the muffler unit **(401)** to prevent burn injuries in event of contact of a rider or passenger feet with the muffler unit **(401).**

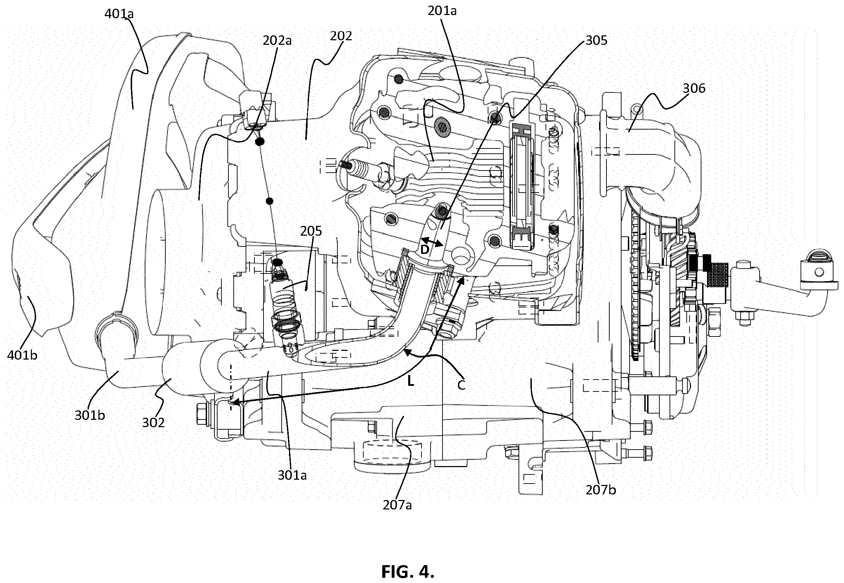

**Fig. 4****.** illustrates a front cut sectional view of the internal combustion engine and an exhaust device according to the embodiment of the present invention. The exhaust pipe front portion **(301)** is bent to have a single corner **(C)** and extends horizontally to join the muffler unit **(401).** The upstream end of the catalytic adaptor **(302)** is located at an axial distance **(L)** from the rear end of the exhaust port **(305)** and said axial distance **(L)** is lies within a range often to twenty times of the diameter **(D)** of the exhaust port **(305).** As it is seen from the figure, the first catalytic converter **(302a)** is disposed well beyond the corner **(C)** portion and lies on substantially the horizontal portion of the exhaust pipe front portion **(301).** The location of first catalytic adaptor **(302)** disposed at a length lies within a range of ten to twenty times of the exhaust port diameter enables the catalytic converter **(302a)** to reach activation temperature at a faster time and starts functioning immediately. The length **(L)** is measured axially along the axis of the exhaust pipe front portion **(301)** in its unbent position. The dimension of exhaust port diameter depends on the cubic capacity of the IC engine and in one embodiment the IC engine is between 100cc to 150cc.

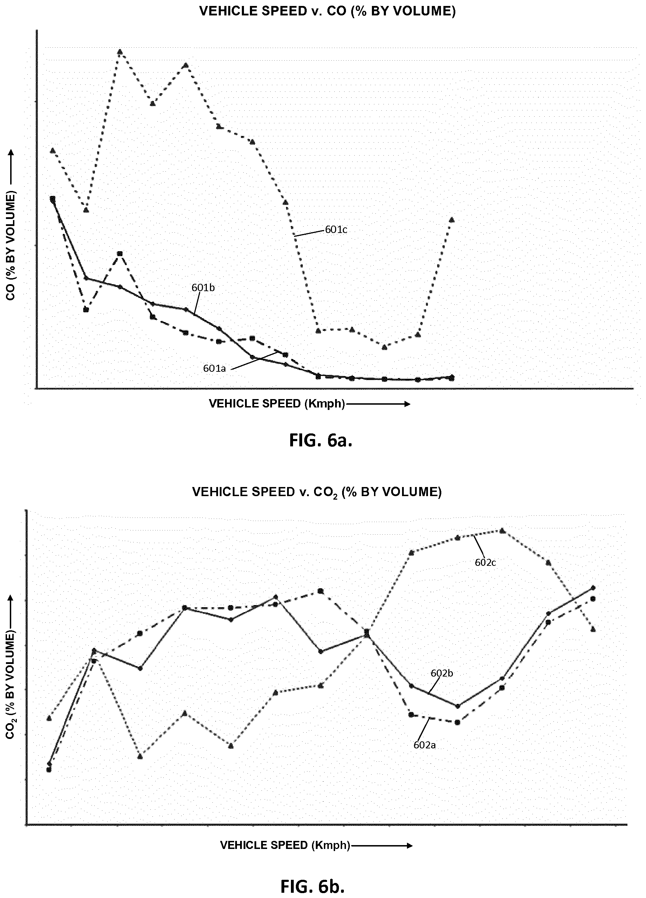

**Fig. 6a.** and **Fig. 6b****.** illustrates the vehicle speed v. CO₂ (% by Volume) graph and vehicle speed v. CO (% by Volume) graph illustrating the improved performance of the first catalytic converter **(302a)** according to the embodiment of the present invention.

As observed in Fig. 6a. when the first catalytic converter is placed very far from the exhaust port, the percentage of carbon monoxide (CO) is more (see **601c**)**.** However, if it is placed to close, the performance of the first catalytic converter is efficient yet we face problems of meltdown of catalytic converter when subjected to higher temperatures (see **601a**)**.** Further, closer the catalytic converter is too the corner bend **(C),** the catalytic converter cannot be manufactured with horizontal profile which increases manufacturing cost. Hence, it is determined that when the location of first catalytic adaptor **(302)** is disposed at a length lies within a range of ten to twenty times of the exhaust port diameter (see **601b),** the performance of the first catalytic converter is largely improved and activation temperature is reached at a faster time. In fig. 6b. similar performance characteristics are observed for a vehicle speed v. carbon dioxide (CO₂). When the first catalytic converter **(302a)** is placed very far to the exhaust port (see **602c),** the percentage of CO2 fluctuates having very high peaks and troughs showing an irregular performance. While placing the first catalytic converter very close to the exhaust port provides a better performance, drawbacks related to catalytic converter meltdown exist (see **602b).** Hence, when placed at a distance lies within a range of ten to twenty times of the exhaust port diameter (see **602b),** we get the best characteristics in terms of performance.

Many modifications and variations of the present subject matter are possible in the light of above disclosure. Therefore, within the scope of the claims of the present invention, the present disclosure may be practiced other than as specifically described.

## Claims

1. An internal combustion engine (101) for a vehicle (100) comprising:
a cylinder head (201a) permitting entry of air fuel mixture for combustion, said cylinder head (201a) comprising an exhaust port (305) through which hot exhaust gases are expelled, said exhaust port (305) having a diameter (D);
an exhaust device (200) said exhaust device (200) comprising:
an exhaust pipe front portion (301) connected to the exhaust port (305) of the internal combustion engine (101), and
a muffler unit (401),
wherein said exhaust pipe front portion (301) extends from the exhaust port (305) for connecting with said muffler unit (401),
wherein said exhaust pipe front portion (301) includes a first exhaust pipe portion (301a), said first exhaust pipe portion (301a) being configured to have a bent corner (C) and a second exhaust pipe portion (301b) having a rear end being configured to join said muffler unit (401);
a catalytic adaptor (302),
wherein a portion of said first exhaust pipe portion (301a) extends horizontally rearward from said bent corner (C), for connecting said catalytic adaptor (302);
wherein said catalytic adaptor (302) is a single structure secured between a rear end of first exhaust pipe portion (301a) and a front end of said second exhaust pipe portion (301b);
a first catalytic converter (302a) which is enclosed within said catalytic adaptor (302);
**characterized in that**
an upstream end of said catalytic adaptor (302) is disposed at an axial distance (L) from the exhaust port (305), said axial distance (L) being measured axially along an axis of said exhaust pipe front portion (301) in an unbent position,
wherein said axial distance (L) is within a range of ten to twenty times of the diameter (D) of the exhaust port (305) to aid in faster temperature rise within the catalytic adaptor (302).

2. The internal combustion engine (101) as claimed in claim 1, wherein the catalytic adaptor (302) is placed on the exhaust pipe front portion (301), wherein the bottom point of the catalytic adaptor (302) is almost inline to the bottommost point of the internal combustion engine (101) permitting natural air flow around the catalytic adaptor (302) and providing optimum ground clearance.

3. The internal combustion engine (101) as claimed in claim 1, wherein said internal combustion engine (101) is covered by a cooling system (202) including a shroud window (203), said cooling system (202) being configured to draw air inside through the shroud window (203) to perform cooling of the internal combustion engine (101), and said exhaust device (200) being secured by configuring at least a part of said exhaust pipe front portion (301) being disposed in a region in front of the shroud window,(203) and said catalytic adaptor (302) being not within said region.

4. The internal combustion engine (101) as claimed in claim 1, wherein the first catalytic converter (302a) being disposed on the horizontal portion substantially downstream of the bent corner (C) of the exhaust pipe front portion (301).

5. The internal combustion engine (101) as claimed in claim 1, wherein the exhaust device (200) comprises a second catalytic converter (303) disposed at the other end of the exhaust pipe front portion (301) where the exhaust pipe front portion (301) meets the muffler unit (401).

6. The internal combustion engine (101) as claimed in claim 1, wherein an oxygen sensor (205) being mounted immediately upstream of the catalytic adaptor (302) on the exhaust pipe front portion (301), said oxygen sensor (205) being configured to read the oxygen content in the exhaust gases.

7. The internal combustion engine (101) as claimed in claim 1, wherein dimension of said exhaust port diameter (D) depends on the cubic capacity of the internal combustion engine (101), said internal combustion engine (101)is in the range between 100 to 150 cubic capacity.

## Patentansprüche

1. Verbrennungsmotor (101) für ein Fahrzeug (100), umfassend:
einen Zylinderkopf (201a), der den Eintritt eines Luft-Kraftstoff-Gemischs zur Verbrennung ermöglicht, wobei der Zylinderkopf (201a) eine Auslassöffnung (305) aufweist, durch die heiße Abgase ausgestoßen werden, wobei die Auslassöffnung (305) einen Durchmesser (D) hat;
eine Abgasvorrichtung (200), wobei die Abgasvorrichtung (200) aufweist:
einen mit der Auspufföffnung (305) des Verbrennungsmotors (101) verbundenen Auspuffrohr-Vorderbereich (301), und
eine Schalldämpfereinheit (401),
wobei sich der Auspuffrohr-Vorderbereich (301) von der Auspufföffnung (305) weg erstreckt, zum Anschließen an die Schalldämpfereinheit (401),
wobei der Auspuffrohr-Vorderbereich (301) einen ersten Auspuffrohrbereich (301a), welcher erste Auspuffrohrbereich (301a) eine gebogene Ecke (C) aufweisend konfiguriert ist, und
einen zweiten Auspuffrohrbereich (301b) mit einem hinteren Ende, der zum Verbinden mit der Schalldämpfereinheit (401) eingerichtet ist, beinhaltet;
einen katalytischen Adapter (302),
wobei ein Teilbereich des ersten Auspuffrohrbereichs (301a) horizontal nach hinten von der gebogenen Ecke (C) zum Anschließen des katalytischen Adapters (302) verläuft;
wobei der katalytische Adapter (302) eine einzelne Struktur ist, die zwischen einem hinteren Ende des ersten Auspuffrohrbereichs (301a) und einem vorderen Ende des zweiten Auspuffrohrbereichs (301b) befestigt ist;
einen ersten katalytischen Konverter (302a), der in dem katalytischen Adapter (302) eingeschlossen ist;
**dadurch gekennzeichnet, dass**
ein stromaufwärts gelegenes Ende des katalytischen Adapters (302) in einem axialen Abstand (L) von der Auspufföffnung (305) angeordnet ist, wobei der axiale Abstand (L) axial entlang einer Achse des Auspuffrohr-Vorderteils (301) in einer nicht gebogenen Position gemessen wird, wobei der axiale Abstand (L) in einem Bereich des Zehn- bis Zwanzigfachen des Durchmessers (D) der Auslassöffnung (305) liegt, um einen schnelleren Temperaturanstieg innerhalb des katalytischen Adapters (302) zu unterstützen.

2. Verbrennungsmotor (101) nach Anspruch 1, wobei der katalytische Adapter (302) auf dem Auspuffrohr-Vorderbereich (301) angeordnet ist, wobei der Bodenpunkt des katalytischen Adapters (302) fast in einer Linie mit dem untersten Punkt des Verbrennungsmotors (101) liegt, was eine natürliche Luftströmung um den katalytischen Adapter (302) ermöglicht und eine optimale Bodenfreiheit schafft.

3. Verbrennungsmotor (101) nach Anspruch 1, wobei der Verbrennungsmotor (101) durch ein Kühlsystem (202) mit einem Verkleidungsfenster (203) abgedeckt ist, wobei das Kühlsystem (202) dazu eingerichtet ist, Luft durch das Verkleidungsfenster (203) nach innen zu ziehen, um die Kühlung des Verbrennungsmotors (101) durchzuführen, und die Abgasvorrichtung (200) dadurch festgelegt ist, dass zumindest ein Teil des Auspuffrohr-Vorderbereichs (301) in einem Gebiet vor dem Verkleidungsfenster (203) positioniert ist und der katalytische Adapter (302) sich nicht in diesem Gebiet befindet.

4. Verbrennungsmotor (101) nach Anspruch 1, wobei der erste katalytische Konverter (302a) auf dem horizontalen Abschnitt im Wesentlichen stromabwärts der gebogenen Ecke (C) des Auspuffrohr-Vorderbereichs (301) angeordnet ist.

5. Verbrennungsmotor (101) nach Anspruch 1, wobei die Abgasvorrichtung (200) einen zweiten katalytischen Konverter (303) aufweist, der am anderen Ende des Auspuffrohr-Vorderbereichs (301) angeordnet ist, wo der Auspuffrohr-Vorderbereich (301) auf die Schalldämpfereinheit (401) trifft.

6. Verbrennungsmotor (101) nach Anspruch 1, wobei ein Sauerstoffsensor (205) unmittelbar stromaufwärts des katalytischen Adapters (302) auf dem Auspuffrohr-Vorderbereich (301) angebracht ist, wobei der Sauerstoffsensor (205) dazu eingerichtet ist, den Sauerstoffgehalt in den Abgasen zu messen.

7. Verbrennungsmotor (101) nach Anspruch 1, wobei die Bemaßung des Durchmessers (D) der Auslassöffnung vom Hubraum des Verbrennungsmotors (101) abhängt, der Verbrennungsmotor (101) im Bereich zwischen 100 und 150 Hubraum liegt.

## Revendications

1. Moteur à combustion interne (101) pour un véhicule (100) comprenant :
une culasse (201a) permettant l'entrée du mélange air-carburant pour la combustion, ladite culasse (201a) comportant un orifice d'échappement (305) par lequel les gaz d'échappement chauds sont expulsés, ledit orifice d'échappement (305) ayant un diamètre (D) ;
un dispositif d'échappement (200), ledit dispositif d'échappement (200) comprenant :
une partie avant du tuyau d'échappement (301) reliée à l'orifice d'échappement (305) du moteur à combustion interne (101), et
une unité de silencieux (401),
ladite partie avant du tuyau d'échappement (301) s'étendant à partir de l'orifice d'échappement (305) pour se connecter à ladite unité de silencieux (401),
ladite partie avant du tuyau d'échappement (301) comportant une première partie de tuyau d'échappement (301a), ladite première partie de tuyau d'échappement (301a) étant configurée pour avoir un coin courbé (C), et une deuxième partie de tuyau d'échappement (301b) ayant une extrémité arrière configurée pour rejoindre ladite unité de silencieux (401) ;
un adaptateur catalytique (302),
une partie de la première partie du tuyau d'échappement (301a) s'étendant horizontalement vers l'arrière à partir de l'angle courbé (C), pour raccorder l'adaptateur catalytique (302) ;
ledit adaptateur catalytique (302) est une structure unique sécurisée entre l'extrémité arrière de la première partie du tuyau d'échappement (301a) et l'extrémité avant de la deuxième partie du tuyau d'échappement (301b) ;
un premier convertisseur catalytique (302a) qui est enfermé dans ledit adaptateur catalytique (302) ;
**caractérisé en ce que**
une extrémité amont dudit adaptateur catalytique (302) est disposée à une distance axiale (L) de l'orifice d'échappement (305), ladite distance axiale (L) étant mesurée axialement le long d'un axe de ladite partie avant du tuyau d'échappement (301) dans une position non pliée, ladite distance axiale (L) étant comprise entre dix et vingt fois le diamètre (D) de l'orifice d'échappement (305) afin d'aider à l'élévation plus vite de la température à l'intérieur de l'adaptateur catalytique (302).

2. Moteur à combustion interne (101) selon la revendication 1, dans lequel l'adaptateur catalytique (302) est placé sur la partie avant du tuyau d'échappement (301), le point inférieur de l'adaptateur catalytique (302) étant presque aligné avec le point le plus bas du moteur à combustion interne (101) permettant un flux d'air naturel autour de l'adaptateur catalytique (302) et fournissant une garde au sol optimale.

3. Moteur à combustion interne (101) selon la revendication 1, dans lequel ledit moteur à combustion interne (101) est couvert par un système de refroidissement (202) comportant une fenêtre d'enveloppe (203), ledit système de refroidissement (202) étant configuré pour aspirer l'air à l'intérieur à travers la fenêtre d'enveloppe (203) afin de refroidir le moteur à combustion interne (101), et ledit dispositif d'échappement (200) étant sécurisé par la configuration d'au moins une partie de ladite partie avant du tuyau d'échappement (301) étant disposée dans une région en avant de la fenêtre d'enveloppe (203) et ledit adaptateur catalytique (302) n'étant pas dans ladite région.

4. Moteur à combustion interne (101) selon la revendication 1, dans lequel le premier convertisseur catalytique (302a) est disposé sur la partie horizontale sensiblement en aval du coin courbé (C) de la partie avant du tuyau d'échappement (301).

5. Moteur à combustion interne (101) selon la revendication 1, dans lequel le dispositif d'échappement (200) comprend un deuxième convertisseur catalytique (303) disposé à l'autre extrémité de la partie avant du tuyau d'échappement (301), là où la partie avant du tuyau d'échappement (301) rencontre l'unité de silencieux (401).

6. Moteur à combustion interne (101) selon la revendication 1, dans lequel un capteur d'oxygène (205) est monté immédiatement en amont de l'adaptateur catalytique (302) sur la partie avant du tuyau d'échappement (301), ledit capteur d'oxygène (205) étant configuré pour lire la teneur en oxygène des gaz d'échappement.

7. Moteur à combustion interne (101) selon la revendication 1, dans lequel la dimension du diamètre de l'orifice d'échappement (D) dépend de la cylindrée du moteur à combustion interne (101), ledit moteur à combustion interne (101) ayant une cylindrée comprise entre 100 et 150.
